# EUROPEAN PATENT SPECIFICATION

(11) **EP 0 442 848 B1**
(45) Date of publication and mention of the grant of the patent: **03.01.1996**
(21) Application number: 91810101.5
(22) Date of filing: 13.02.1991
(51) Int. Cl.: H02P 5/402

(54) **Variable-speed AC drive utilizing a short-circuit-rotor polyphase induction motor**
Wechselstromantrieb veränderbarer Gescwindigkeit mit einem einen Kurzschlussrotor verwendenden Induktionsmotor
Moteur à courant alternatif et vitesse variable utilisant un moteur à induction avec un rotor de court circuit

(30) Priority: 14.02.1990 CH 469/90
(43) Date of publication of application: 21.08.1991
(73) Proprietor: Torchio, Giuseppe, CH-6831 Sagno (CH)
(72) Inventor: Torchio, Giuseppe, CH-6831 Sagno (CH)
(74) Representative: Moretti, Francesco, Dr.

(56) References cited:
- DE-U- 8 904 874
- REVUE GENERALE DE L'ELECTRICITE, vol. 84, no. 11, November 1975, PARIS, FR, pages 807 - 808; F. BRICHANT: 'ACCELERATION ET DECELERATION CONTROLEES DE MOTEURS ASYNCHRONES A CAGE PAR GRADATEUR'
- ELEKTROTECHNISCHE ZEITSCHRIFT, AUSGABE B, vol. 26, no. 23, 1974, BERLIN, DE, pages601 - 603; H. EICHENHOFER ET AL.: 6pulsige wechselrichtergespeiste Asynchronmaschien'

## Description

The present invention refers to a variable-speed AC drive utilizing a short-circuit-rotor polyphase induction motor. By placing in the stator of the motor two windings controlled by diodes which are in turn controlled by electronic devices which receive the inputs of the required speed and torque, the short-circuit-rotor induction motor can be operated at variable speed competitive with the DC ones.

The electric drives with AC motors suffered an extraordinary development with the introduction of the asynchronous motors.
The advantages of this motor are know and are due mainly to its simply and rugged construction,to its economical manufacturing and to the already existing international standard, relevant both to dimensions and power.
The torque is generated at the rotor of all the rotating-field machines more or less according to the same principle: by means of a polyphase winding a a rotating magnetic field is generated, which induces a current into the cage windings of the rotor thanks to the phenomenon of the electromagnetic induction. The rotor current produces in turn a rotor magnetic field which reacts with the stator one.

As a consequence of the interaction between the two magnetic fields the rotor is put to rotation and tries to reach the same speed of the stator magnetic field.

From these short remarks it follows:
- The generation of the rotor magnetic field occurs without direct contact thanks to the magnetic induction between stator and rotor.
   Components like commutators and brushes, which can be found in the DC machines, are absent in the induction motors.
- Because the rotor tries to rotate at the same speed of the inductive stator magnetic field, the speed of the induction motor is in general predetermined by its building features. Thus it must be noted that the rotation speed of the induction motors cannot be substantially modified.

For this reason the use of the simple and rugged asynchronous motor fails if the drive is required to operate in a wide range of speeds.
In spite of many attempts made already in the thirties to supply the asynchronous motor with variable-frequency AC the classic DC motor prevailed all over the world for this kind of drives, where a high tuning and control dynamic was requested.

The achieved development in the last ten years in the field of the technique of the rectifiers, the realization of high-power controlled diodes as well as of analog and digital integrated circuits led to a revision of the concepts of the AC drives under a fully new light.

Today it is possible to obtain variable-speed AC drives for not too high powers if the supply frequency remains unchanged and without any power limitation if the supply frequency can vary.
To give a better picture to the user, it is possible to recognize that the AC drives can be subdivided in three main groups as follows:

### a) Systems with fixed stator frequency

Through a suitable arrangement of the electronic section the single- or three-phase stator voltage is adjusted so that the motor can supply the required torque at the nominal speed.

### b) Systems with variable stator frequency

The fixed mains frequency is transformed by means of a frequency converter in an alternating single- or three-phase voltage which supplies the stator windings of the motor.

### c) Special systems

In this group we can quote the hyposynschronous rectifier circuits in cascade or similar for which the motors must be provided with slip rings.

As already said the rotating megnetic field rotates always at the same constant speed with supply at the mains frequency. A synchronous speed of 3000 rpm results from a two-pole stator, 1500 rpm from a four-pole stator and so on.
If the rotor rotates at the same synchronous speed, it could not provide any tourque because of reasons of balance of energy.
For this reason the rotor of an asynchronous motor will have to rotate at a speed a certain percentage lower than the speed of the rotating magnetic field.
The diference between the synchronous speed of the stator field and the speed of the rotor is in general indicated as slip s.

In the current asynchronous motors with a low rotor resistance a high torque is generated at low slip. The load on the motor cannot be at will increased because an increase of the slip is caused by a more and more high torque and the speed of the motor approaches the critical one.
If this speed is exceeded a quick droop of the torque occurs and the motor stops at a parity of load.

Thus the asynchronous motos shows the better behaviour close to the synchronous speed; on the other hand at reduced speed the torque-speed characteristic shows no ideal trend at all.

Lately special-built asynchronous motors appeared on the market in which the rotor winding has high resistance or is made of many sections.
By means of these contrivances a high torque has been reached at low number of revolutions, but at the expenses of the maximum torque close to the synchronous speed.

The drives utilizing three-phase short-circuit-rotor induction motors are without any doubt the most used. The simplicity, the building solidity and the relatively low cost of this kind of motor favoured its use even if its use in variable-speed drives is almost ever not very easy.
When the variation and the adjustement of the speed was necesary, the less reliable and more expensive DC motor had almost ever the upper hand. The current developments and the reduction of costs in the field of the electronic technique favoured this approach even if in some particular cases and using modern electronic techniques the short-circuit-rotor induction motor can fit the needs of the variable speed with a good competitivity with the DC motor.
The major drawback to be overcome in variable-speed drives utilizing induction motors comes from the fact that in the operation at low speed the power dissipated at the rotor is proportional to the slip. This fact makes very difficult the elimination of the heat produced at the rotor and reduces as a consequence the efficiency of the motor. The variable-speed AC drive disclosed in the 'Revue Generale de l'electricite' vol.84, no.11, november 1975, Paris, France, pages 807-808, F.Brichant 'Acceleration et deceleration controlees de moteurs asynchrones a cage par gradateur',utilizes a short-circuit-rotor polyphase induction motor and includes an acceleration/deceleration regulator acting electronic devices to control speed ramps but its application is restricted to the start and stop phases similar to that used with CC (DC) motors particularly to drive elevators. The described acceleration/deceleration (RAD) regulator represents only a damper during the eventual sudden variations in the transient states and can be eliminated in the variable-speed AC drive of the invention without any defect during the operation phase varying and controlling the running speed in order to obtain the desired torque at the set speed.

The aim of the present invention is to prevent the mentioned drawbacks showing a very competitive drive, that means a short-circuit rotor polyphase induction motor.

The utilized motor, which is part of the present invention too, has been provided with two identical windings, connected to the mains by means of controlled diodes, arranged in such a way to generate two rotating fields with variable amplitude having opposite directions of rotation in order to avoid the negative effect of the rotor current at a speed lower than the synchronous one. More precisely the present invention refers to a variable-speed AC drive according to independent claim 1.

A particular way of execution of the present invention includes:
- Acceleration/deceleration regulator
   Analog electronic device of control of the starting ramp or of the variation of the speed of the motor.
- Speed regulator
   It includes three electronic devices.
   The first one determines on the basis of the signal provided by the speedometer dynamo and controlled by the acceleration/deceleration regulator the amplitude of the intervention of the second and third speed regulator.
   The second and the third speed regulators provide the signal to the two modulators which define the amplitude of the wave choking of the controlled diodes.
- Controlled diodes
   Group of three controlled diodes for each winding of the asynchronous motor, drived by the two modulators and able to provide the wave choking corresponding to the supply voltage of each single winding.
- Short-circuit-rotor asynchronous three-phase motor
   The motor has two identical windings supplied in such a way that they produce two rotating magnetic fields whose directions of rotation are opposed. In this way the negative effect of the rotor current at numbers of revolutions lower than those corresponding to the synchronous speed is avoided.

We given herebelow a non-limiting description of the invention with reference to the attached figures:
- Fig. 1 represents a diagram of the torque when the supply voltages of the two windings are equal.
- Fig. 2 represents the block diagram of the variable-speed drive object of the invention.

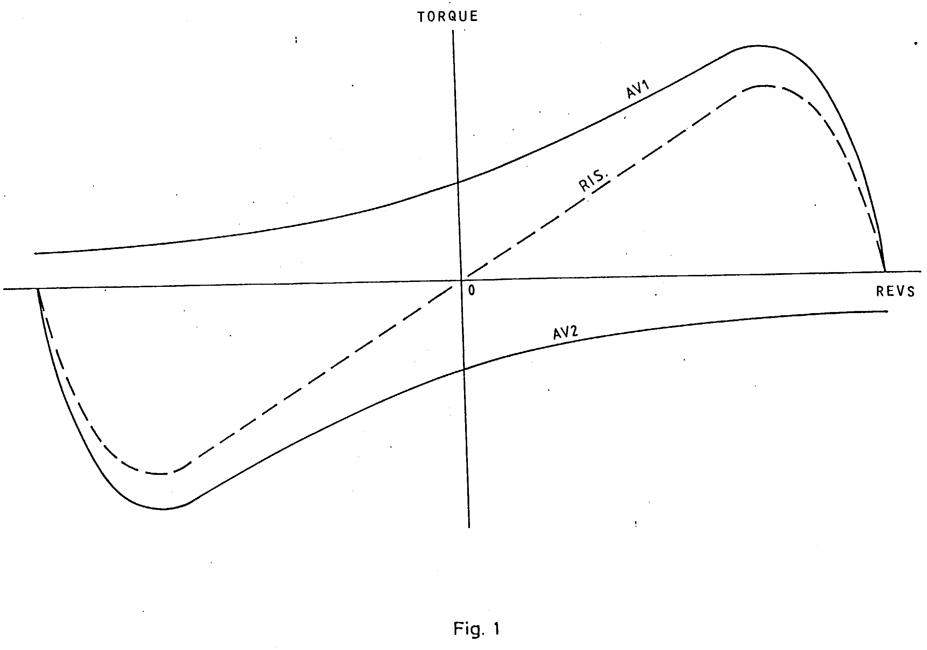

If, as shown in Fig. 1, we imagine the two curves of torque versus number of revolutions, which would be generated by each single winding, respectively A1 and A2, when supplied indipendently by full voltage and we remember that the resultant (RIS) of the two curves (represented in the figure by the dotted line) is given by the instantaneous difference between the two component torques, we will note that the motor under those particular conditions would behave as a singlephase induction motor. That means that at zero speed no current will be generated at the rotor and thus no torque even if the two stator windings are supplied by full voltage. But in any case, as already said, the two windings are supplied by mains through controlled diodes and the respective voltages can be varied at will. Remembering that every reduction of the supply voltage of the windings produce a reduction of the generated torque, however without modifying the trend of the curves represented in the Figure 1, we can conclude saying that varying opportunely the supply voltage it will be possible to obtain the desidered resulting torque at any speed between zero and the speed close to the synchronism and that this torque will be generated by a rotor current limited to the keeping of the same torque.

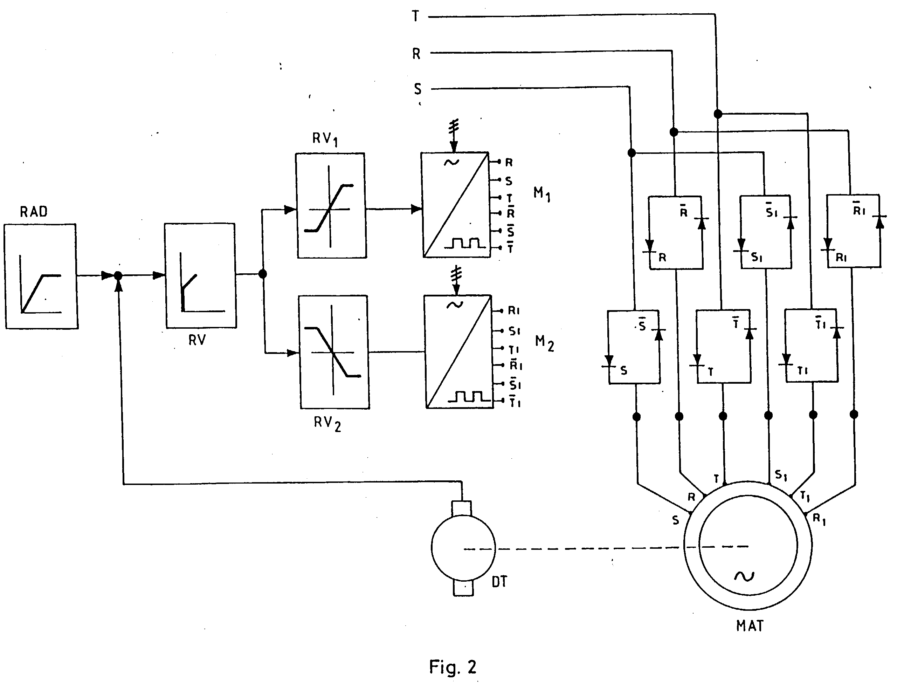

After having defined the above let's have a look to the actual operation of the proposed drive. As indicated in the block diagram shown in Figure 2, the motor MAT is coupled directly to a speedometer dynamo DT which provides the input signal to the speed of the same motor.

This signal can possibly be modulated in order to adjust if necessary either the acceleration or the deceleration of the motor through the regulator RAD. Moreover as indicated in the diagram of Figure 2, the speed regulator RV is split in two RV1 and RV2 in order to control separately and through two modulators M1 and M2 the controlled diodes of the two windings AV1, AV2. If at zero speed the two modulators adjust the controlled diodes RR, SS, TT and R1R1, S1S1, T1T1 in order to provide the two windings respectively with the half of the mains voltage, no current will be generated in the rotor and the motor MAT will remain at standstill. If this condition of balance is modified through a signal of the speed regulator RV, the two modulators M1, M2 will be in turn stimulated in the opposite direction and in the required direction to increase on one side and to decrease on the other side the supply voltage of the two windings. In these conditions a current will be generated at the rotor and thus a torque which will start the motor (always in the required direction); the acceleration will last until the signal of the speedometer dynamo equals the one fixed by the speed regulator. Every subsequent try of varying the speed originated by a different request of torque of the drived machine will be compensated and the speed will be kept constant.

In case the drived machine try to lead the motor to a speed higher than desidered, the signal of the speedometer dynamo will generate a variation of the modulators such that it creates a braking torque with consequent recovery of the energy required for the braking.
In conclusion we can say that, having set a speed of the motor between zero and a speed close to the synchronism, the proposed drive will behave so that it will keep this value constant reacting both actively and passively to every variation of the torque required by the driven machine.
Taking then into consideration the great flexibility of operation and the recovery of energy during the braking phase, we can say that the proposed drive is comparable under every aspect both woth those with DC supply and those with variable-frequency AC supply.
From the point of view of the cost it is enough to note that the proposed drive lacks the quite expensive part relevant to the production of the direct current in one case and to the variation of the frequency in the other case.
It could be objected that the motor used in the proposed drive - having to host in the grooves of the stator two windings instead of one - will have to have larger dimensions and that its cost will be higher than that of a normal asynchronous motor; however this cost will never reach the cost of a comparable DC motor and its simplicity and robustness could hardly be equalled.

## Claims

1. Variable-speed AC drive utilizing a short-circuit-rotor polyphase induction motor (MAT) including speed regulators (RV,RV1,RV2), controlled diodes (Ri,Si,Ti) drived by modulators (M1,M2), said speed regulators determining the value of wave choking of said controlled diodes on the basis of signal provided by a speedometer dynamo (DT), characterized by the fact that said short-circuit-rotor polyphase induction motor (MAT) has two identical stator windings (AV1,AV2) supplied indipendently by said controlled diodes (Ri,Si,Ti) driven by said speed regulators (RV,RV1,RV2) through said modulators (M1,M2) in order to generate rotating fields of variable amplitude with opposed direction of rotation obtaining at the set speed a torque equal to the instataneous difference between the two component torques generated by each single winding thus, avoiding the negative effect of the rotor current at numbers of revolution below the synchronous speed.

2. AC drive as claimed in claim 1, characterized by the fact that it includes an acceleration/deceleration regulator (RAD) of control of the starting ramp on of the variation of the speed of the motor.

3. AC drive as claimed in Claim 1 or 2, wherein the speed regulators in number of three are electronic components, integrated circuits of analog or digital type, the first one (RV) determining the amplitude of the intervention of the second (RV1) and of the third (RV2) speed regulator on the basis of the signal provided by the speedometer dynamo (DT) and controlled by the acceleration/deceleration regulator (RAD), said second (RV1) and said (RV2) regulator providing respectively the signal to two modulators (M1, M2) to define the amplitude of the wave choking of the controlled diodes (RR, SS, TT, and R1R1, S1S1, T1T1) for each winding and to provide the corresponding supply voltage to each single winding.

4. Use of the drive as claimed in any one of the Claims 1 to 3 to realize drives with AC asynchronous motor with variable speed, ranging between zero and a speed close to the synchronous one.

## Patentansprüche

1. Drehzahlgeregelter Wechselstromantrieb, der einen Mehrphaseninduktionsmotor mit Kurzschlußanker (MAT) benutzt und von Modulatoren (M1, M2) angetriebene gesteurte Dioden (Ri, Si, Ti) und Geschwindigkeitsregler (RV, RV1, RV2), die den Wert der Wellendrosselung der genannten gesteurten Dioden entsprechend einem von einem Tacho-Dynamo (DT) geliefert Signal bestimmt, enthält, von der Tatsache charakterisiert, daß der genannte Mehrphaseninduktionsmotor mit Kurzschlußanker (MAT) zwei identische Statorwickelungen (AV1, AV2) hat, die von den genannten gesteurten Dioden (Ri, Si, Ti), die durch die genannten Modulatoren (M1, M2) von den genannten Geschwindigkeitsreglern (RV, RV1, RV2) angetrieben werden, unabhängig gespeist werden, um gegendrehende Drehfelder mit wechselnder Amplitude zu erzeugen, während ein Drehmoment bei ener festgesetzen Geschwindigkeit erreicht wird, dessen Wert die Momentandifferenz zwischen den zwei von jeder Wickelung erzeugten Drehmoment ist und die negative Wirkung des Rotorstrom bei Drehzähler unten der Synchrongeschwindigkeit vermeidet wird.

2. Wechselstromantrieb gemäß dem Anspruch 1, von der Tatsache charakterisiert, daß er einen Beschleunigungs-/Verzögerungsregler (RAD) enthält, der die Anfangsteigung sowie die Geschwindigkeit des Motors während des Betriebs steuert.

3. WEchselstromantrieb gemäß dem Anspruch 1 oder 2, in dem die (drei) Geaschwindigkeitsregler elektronische Bestandteile, analogische oder digitale integrierte Schaltungen, sind, der erste (RV) bestimmt dem vom Tacho-Dynamo (DT) gelieferten und vom Beschleuniguns-/Verzögerungsregler (RAD) gesteurten Signal entsprechend den Umfang des Eingriffes des zweiten (RV1) und des dritten (RV2) Geschwindigkeitsregler; die genannten zweiten (RV1) und dritten (RV2) Regler liefern das Signal beziehungsweise an zwei Modulatoren (M1, M2), um den Umfang der Wellendrosselung der gesteurten Dioden (RR, SS, TT, R1R1, S1S1, T1T1) für jede Wickelung zu definieren und die entsprechende Speisespannung jeder einzelner Wickelung zu liefern.

4. Verwendung des Antriebs gemäß einem beliebigem Anspruch von 1 bis 3 zur Herstellung von Antrieben mit drehzahlgesteurten Wechselstromsynchronmotoren, mit Geschwindikgeit zwischen Null und jener nahe an Synchronismus.

## Revendications

1. Actionnement à courant alternatif à vitesse variable utilisant un moteur polyphasé à induction avec rotor en court-circuit (MAT) comprenant des régulateurs de vitesse (RV, RV1, RV2), des diodes contrôlées (Ri, Si, Ti) actionnées par des modulateurs (M1, M2), les susdits régulateurs de vitesse déterminant la valeur du découpage d'onde des susdites diodes contrôlées sur la base du signal fourni par une dynamo tachymétrique (DT), caractérisé par le fait que le susdit moteur polyphasé à induction avec rotor en court-circuit (MAT) a deux enroulements identiques (AV1, AV2) au stator alimentés indépendamment par les susdites diodes contrôlées (Ri, Si, Ti) actionnées par les susdits régulateurs de vitesse (RV, RV1, RV2) par moyen des susdits modulateurs (M1, M2) pour produir des champs tournants d'amplitidfe variable avec direction de rotation opposé, obtenant à la vitesse fixée une couple égale à la différence, instant par instant, entre les deux couples composantes produites par chaque enroulenment, évitant de cette façon l'effet negatif du courant au rotor à des nombres de tours au dessous de la vitesse synchrone.

2. Actionnement à courant alternatif d'après la revendication 1, caracterisé par le fait qu'il comprend un régulateur d'accélération/décélération (RAD) de contrôle de la rampe de démarrage et de la variation de la vitesse du moteur.

3. Actionnement à courant alternatif d'après la revendication 1 ou 2, où les régulateurs de vitesse en nombre de trois sont des composants électroniques, circuits integrés de type analogique ou numérique, le premier (RV) déterminant sur la base du signal fourni par la dynamo tachymétrique (DT) et contrôlé par le régulateur d'accélération/décélération (RAD) l'étendue de l'intervention du deuxième (RV1) et du troisième (RV2) régulateur de vitesse, fournissant le signal à deux modulateurs (M1, M2) respectivement, pour définir l'étendue du découpage d'onde des diodes contrôlées (RR, SS, TT et R1R1, S1S1, T1T1) pour chaque enroulement et fournir la tension d'alimentation correspondante de chaque enroulement.

4. Utilisation de l'actionnement d'après une quelconque des revendications de 1 à 3, pour la réalisation de des actionnements avec des moteurs synchrones à courant alternatif à vitesse variable, comprise entre zero et celle proche du synchronisme.
